# EUROPEAN PATENT SPECIFICATION

(11) **EP 0 999 080 B1**
(45) Date of publication and mention of the grant of the patent: **31.01.2007**
(21) Application number: 99121588.0
(22) Date of filing: 29.10.1999
(51) Int. Cl.: B60J 7/04, B62D 25/24

(54) **Vehicle provided with an open roof construction**
Konstruktion der Dachöffnung eines Fahrzeugs
Construction d'ouverture pour toit de véhicule

(30) Priority: 06.11.1998 NL 9810104
(43) Date of publication of application: 10.05.2000
(73) Proprietor: Vermeulen Hollandia Octrooien II B.V., 2003 RX Haarlem (NL)
(72) Inventor: Zonneveld, Eric Petrus, 1963 KG Heemskerk (NL); De Vries, Frits Pieter, 1851 BV Heiloo (NL)
(74) Representative: Wiese, Gerhard

(56) References cited:
- US-A- 4 043 590
- US-A- 4 801 174
- US-A- 4 852 938
- US-A- 5 145 231
- US-A- 5 325 585

## Description

The invention relates to a vehicle provided with an open roof construction according to the preamble of claim 1. The invention also relates to a method for mounting an open roof construction to a vehicle according to claim 9.

An increasing percentage of car buyers want a sliding roof with a large slide opening and/or a large glass surface. US-A 4 801 174 shows a vehicle comprising a T-shaped center bar crossing the middle of a large roof opening in transverse direction between the B-pillars as well as in lengthwise direction, the latter part of the center bar carrying a center guide rail for guiding slidable panels. The center bar is part of the original equipment of the car and serves for increasing stability of the vehicle roof.

German Patent Application 3 802 380 shows a vehicle roof having a large roof opening which can be covered by two roof panels positioned one behind the other: the rear panel can be removed - after unlocking - and the front panel can first be tilted in the manner of a so-called spoiler roof such that the rear edge is raised and can then be slid backwards.

German Utility Model 29 512 643 shows a vehicle having a spoiler roof consisting of two panels, which are positioned one behind the other and are slidable in the longitudinal direction of the vehicle, and means for pivoting the panels upwards into the ventilation position and for moving them in the opposite direction into the closed position.

These known constructions do not have a roof cross-member, which greatly increases the safety of the occupants in the event of a collision from the side. It is true that such a roof cross-member, fitted between the B-pillars of the body of a vehicle, is known per se, but this would have to be removed if the abovementioned vehicle roof construction had to be fitted. The removal of a roof cross-member is not desirable. After all, the sliding roof construction does not assume or inadequately assumes the safety function of the roof cross-member.

The aim of the invention is to provide a vehicle as specified in the preamble, provided with an open roof construction, with which the safety of the occupants is not put at issue and which is easy to mount.

According to the invention, the vehicle as specified in the preamble is to this end characterised in that a centre bar, which increases safety and is intended for the fitting of facilities, is fixed to the body of the vehicle in the mid region of the roof opening by means of fixing means comprising brackets.

The centre bar can replace the centre cross-member which is fitted as standard in the vehicle and has been removed.

If the open roof construction is provided with a frame that delimits the edges of the roof opening, the ends of the centre bar can have been fixed to the frame.

The centre bar can serve to house a wide variety of accessories, such as two roller sunblinds, one that can be moved forwards from the centre bar and one that can be moved to the rear from the centre bar into the working position, storage compartments and light fittings.

Vents can have been fitted, as well as light fittings, at the rear edge of the rear panel.

Movement of the front panel can be implemented in various ways. Preferably, the front panel is able to slide over the rear panel following a lifting movement.

The invention will now be explained in more detail with reference to the figures, in which an illustrative embodiment is shown.

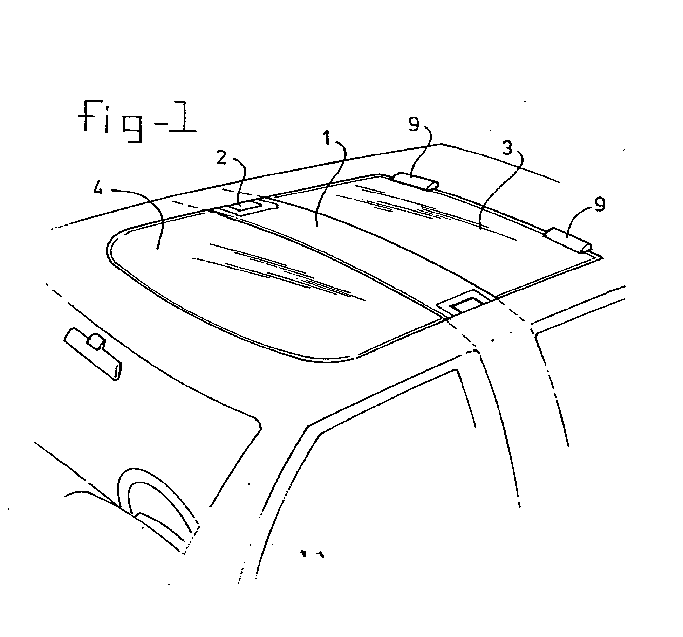

Figures 1, 2 and 3 show perspective views of the top section of a vehicle having an open roof construction according to the invention provided with a sliding roof, in, respectively, the completely closed position and two successive positions in order to achieve the open ventilation position.

Figure 4 shows a perspective view of the lower face of the sliding roof.

The vehicle shown has a sliding roof having a robust, fixed centre bar 1 which is fixed at two ends to the body by means of brackets 2. The centre bar gives rise to greatly increased safety.

A rear glass panel 3 is fixed by its front edge to the centre bar 1 and is not movable. The rear edge of the rear glass panel seals against the rear edge of the roof opening 7 or of the sliding roof frame, 16.

The front panel 4 is movable between an open and a closed position. Movement of this panel can be realised in various ways. In the illustrative embodiment shown the front panel 4 is first raised into a position higher than the fixed rear panel 3 and is then slid backwards over the rear panel.

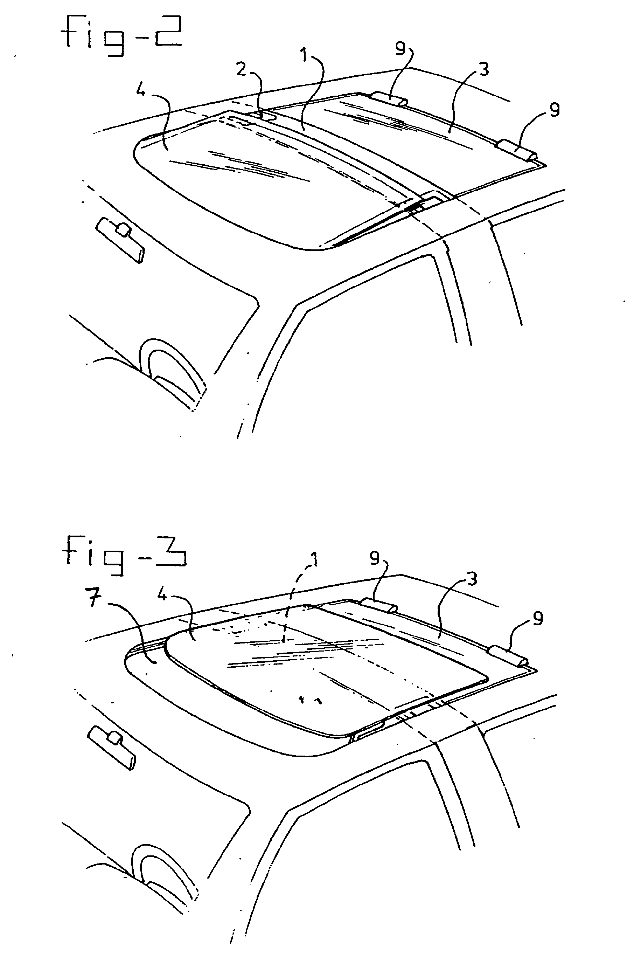

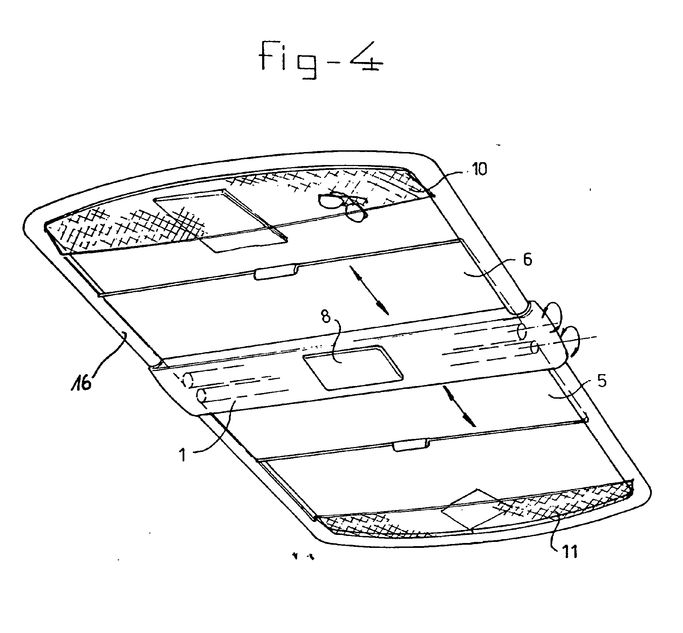

As far as safety is concerned, the centre bar 1 constitutes a replacement for the roof cross-member (insofar as this was present) and, as Figure 4 shows, can be used for fitting two sunblinds 5, 6: one that moves forwards from the centre bar 1 and one that moves backwards from the centre bar 1 into the position in which they provide protection against the sun.

Furthermore, storage compartments, light fittings (8 in Figure 4), switches for controlling the sunblinds and other accessories can have been fixed to the centre bar 1.

Vents 9 to improve the discharge of air can have been fitted, as well as light fittings, storage nets 10, etc., at the rear edge of the sliding roof frame. Accessories, such as a storage net 11, can also have been fitted at the front edge of the frame of the sliding roof.

The invention is not restricted to a vehicle provided with a sliding roof construction having two glass panels positioned one behind the other and can be used for other open roof constructions having a large opening in the roof. The essential feature is that a centre bar is fixed to the body of the vehicle in the mid region of the roof opening by means of fixing means comprising brackets, which centre bar is in view inside the vehicle and can be used for the fitting of facilities.

### List of reference numerals:

- 1: centre bar
- 2: brackets
- 3: rear panel
- 4: front panel
- 5: sunblind
- 6: sunblind
- 7: roof opening
- 8: light fittings
- 9: vents
- 10: storage net
- 11: storage net
- 16: frame

## Claims

1. Vehicle provided with an open roof construction, comprising a centre bar (1), which increases safety and is intended for the fitting of facilities(5, 6, 8), being fixed to the body of the vehicle in the mid region of the roof opening (7), which centre (1) bar is in view inside the vehicle, **characterised in that** the centre bar (1) is provided for replacement of a centre cross-member which is fitted as standard in the vehicle between the B-Pillars, wherein fixing means for fixing the said centre bar to the body comprise fixing brackets.

2. Vehicle according to claim 1, the open roof construction of which is provided with a frame (16) that delimits the edges of the roof opening, **characterised in that** the ends of the centre bar are fixed to the frame.

3. Vehicle according to one of the preceding claims, having two glass panels (4, 3) positioned one behind the other, **characterised in that** the centre bar (1) serves to house two separate roller sunblinds (5, 6): one that can be moved forwards from the centre bar (1) and one that can be moved to the rear from the centre bar into the working position.

4. Vehicle according to one of the preceding claims, **characterised in that** storage compartments are fitted on the centre bar (1).

5. Vehicle according to one of the preceding claims, **characterised in that** light fittings (8) are fitted on the centre bar (1).

6. Vehicle according to one of Claims 3 to 5, **characterised in that** vents (9) are fitted at the rear edge of the rear glass panel (3).

7. Vehicle according to Claim 5, **characterised in that** light fittings are fitted at the rear edge of the rear panel (3).

8. Vehicle according to one of Claims 1 to 2 having two glass panels (3, 4) positioned one behind the other, the front panel (4) of which is able to slide over the rear panel (3) following a lifting movement.

9. Method for mounting an open roof construction to a vehicle, comprising the steps of removing a centre cross-member fitted between the B-Pillars of the body of the vehicle, and replacing it by a centre bar fixed to the body of the vehicle in the mid region of a roof opening, said centre bar being provided for increasing safety and being intended for the fitting of facilities.

10. Method according to claim 9, wherein the open roof construction comprises a frame delimiting the edges of the roof opening and wherein the ends of the centre bar are fixed to said frame.

## Patentansprüche

1. Fahrzeug mit einer Offendachkonstruktion, umfassend eine Mittelstrebe (1), die die Sicherheit erhöht und bestimmt ist zur Anbringung von Einrichtungen (5, 6, 8), die im Mittelbereich der Dachöffnung (7) an der Fahrzeugkarosserie fest angebracht ist, wobei die Mittelstrebe (1) von der Fahrzeuginnenseite aus sichtbar ist,
**dadurch gekennzeichnet, dass** die Mittelstrebe (1) zum Ersatz eines mittigen Querträgers vorgesehen ist, der als Standardausrüstung im Fahrzeug zwischen den B-Säulen angebracht ist, wobei Befestigungsmittel zur Befestigung der obengenannten Mittelstrebe an der Karosserie Befestigungshalterungen umfassen.

2. Fahrzeug nach Anspruch 1, dessen Offendach-Konstruktion mit einem Rahmen (16) ausgestattet ist, der die Kanten der Dachöffnung begrenzt, **dadurch gekennzeichnet, dass** die Enden der Mittelstrebe am Rahmen befestigt sind.

3. Fahrzeug nach einem der vorhergehenden Ansprüche, mit hintereinander liegenden zwei Glasdeckeln (4, 3),
**dadurch gekennzeichnet, dass** die Mittelstrebe (1) zwei getrennte Sonnenschutzrollos (5, 6) aufnimmt: eines das von der Mittelstrebe (1) aus nach vorne und eines, das von der Mittelstrebe aus nach hinten in die Arbeitsstellung bewegt werden kann.

4. Fahrzeug nach einem der vorhergehenden Ansprüche,
**dadurch gekennzeichnet, dass** Ablagefächer an der Mittelstrebe (1) angebracht sind.

5. Fahrzeug nach einem der vorhergehenden Ansprüche,
**dadurch gekennzeichnet, dass** Beleuchtungseinrichtungen (8) an der Mittelstrebe (1) angebracht sind.

6. Fahrzeug nach einem der Ansprüche 3 bis 5,
**dadurch gekennzeichnet, dass** Entlüftungen (9) an der Hinterkante des hinteren Glasdeckels (3) angebracht sind.

7. Fahrzeug nach Anspruch 5,
**dadurch gekennzeichnet, dass** Beleuchtungseinrichtungen an der Hinterkante des hinteren Deckels (3) angebracht sind.

8. Fahrzeug nach einem der Ansprüche 1 bis 2, mit zwei hintereinander gelegenen Glasdeckeln (3, 4), wobei der vordere Deckel (4) nach einer Hochschwenkbewegung über den hinteren Deckel (3) verschoben werden kann.

9. Verfahren zum Einbau einer Offendach-Konstruktion in ein Fahrzeug, mit folgenden Schritten: Ausbau eines zwischen den B-Säulen der Fahrzeugkarosserie angebrachten mittigen Querträgers und Ersatz durch eine Mittelstrebe, die an der Fahrzeugkarosserie im Mittelbereich einer Dachöffnung befestigt wird, wobei die Mittelstrebe zur Erhöhung der Sicherheit und zur Anbringung von Einrichtungen vorgesehen ist.

10. Verfahren nach Anspruch 9, wobei die Offendach-Konstruktion einen Rahmen umfasst, der die Kanten der Dachöffnung begrenzt, und wobei die Enden der Mittelstrebe an diesem Rahmen befestigt werden.

## Revendications

1. Véhicule pourvu d'une construction de toit ouvrant, comprenant une barre centrale (1) qui augmente la sécurité et est destinée au montage d'accessoires (5, 6, 8), qui est fixée à la carrosserie du véhicule au niveau de la région centrale de l'ouverture du toit (7), la barre centrale (1) étant visible à l'intérieur du véhicule, **caractérisé en ce que** la barre centrale (1) est fournie pour le remplacement d'un membre transversal central qui est monté en standard dans le véhicule entre les montants de milieu, dans lequel des moyens de fixation pour fixer ladite barre centrale à ladite carrosserie comprennent des pattes de fixation.

2. Véhicule selon la revendication 1, dont la construction de toit ouvrant est fournie avec un châssis (16) qui délimite les bords de l'ouverture du toit, **caractérisé en ce que** les extrémités de la barre central sont fixées au châssis.

3. Véhicule selon l'une des revendications précédentes, possédant deux panneaux de verre (4, 3) disposés l'un derrière l'autre, **caractérisé en ce que** la barre centrale (1) sert à loger deux pares soleil à enroulement (5, 6) séparés : un pouvant être déplacé en avant de la barre centrale (7) et un pouvant être déplacé en arrière de la barre centrale (1), dans la position de fonctionnement.

4. Véhicule selon l'une des revendications précédentes, **caractérisé en ce que** des compartiments de rangement sont montés sur la barre centrale (1).

5. Véhicule selon l'une des revendications précédentes, **caractérisé en ce que** des luminaires (8) sont montés sur la barre centrale (1).

6. Véhicule selon l'une des revendications 3 à 5, **caractérisé en ce que** des prises d'air (9) sont montées au niveau du bord arrière du panneau de verre arrière (3).

7. Véhicule selon la revendication 5, **caractérisé en ce que** des luminaires sont montés au niveau du bord arrière du panneau de verre arrière (3).

8. Véhicule selon l'une des revendications 1 à 2, possédant deux panneaux de verre (3, 4) disposés l'un derrière l'autre, dont le panneau de verre avant (4) est capable de glisser au-dessus du panneau de verre arrière (3) suite à un mouvement de soulèvement.

9. Procédé pour monter une construction de toit ouvrant à un véhicule, comprenant les étapes consistant à supprimer un membre transversal central monté entre les montants de milieu de la carrosserie d'un véhicule et le remplacer par une barre centrale fixée à la carrosserie du véhicule au niveau de la région centrale d'une ouverture du toit, ladite barre centrale étant fournie pour augmenter la sécurité et étant destinée au montage d'accessoire.

10. Procédé selon la revendication 9, dans lequel la construction de toit ouvrant comprend un châssis qui délimite les bords de l'ouverture du toit et dans lequel les extrémités de la barre central sont fixées audit châssis.
